# FASCICULE DE BREVET EUROPEEN

(11) **EP 1 609 256 B1**
(45) Date de publication et mention de la délivrance du brevet: **13.06.2007**
(21) Numéro de dépôt: 04742400.7
(22) Date de dépôt: 30.03.2004
(51) Int. Cl.: H04B 10/18, H04B 10/17

(54) **DISPOSTIF OPTIQUE, NOTAMMENT DE SUPPRESSION DU BRUIT DIT DE DOUBLE RETRO-DIFFUSION RAYLEIGH, ET INSTALLATION COMPORTANT UN TEL DISPOSITIF**
OPTISCHE EINRICHTUNG INSBESONDERE ZUR UNTERDRÜCKUNG VON RAYLEIGH-DOPPEL-RÜCKGESTREUTEM RAUSCHEN UND SYSTEM MIT DER EINRICHTUNG
OPTICAL DEVICE, ESPECIALLY FOR THE SUPPRESSION OF A RAYLEIGH DOUBLE BACKSCATTERED NOISE AND SYSTEM COMPRISING SAID DEVICE

(30) Priorité: 31.03.2003 FR 0303967
(43) Date de publication de la demande: 28.12.2005
(73) Titulaire: FRANCE TELECOM, 75015 Paris (FR)
(72) Inventeur: CAPOUILLIET, Sylvain, F-59226 Lecelles (FR); PINCEMIN, Erwan, F-22290 Gommenec'h (FR)
(74) Mandataire: Remy, Vincent Noel Paul
(86) Numéro de dépôt international: PCT/FR2004/000799
(87) Numéro de publication internationale: WO 2004/091122

(56) Documents cités:
- EP-A- 0 789 432
- WO-A-02/03579
- US-A1- 2002 081 069
- US-A1- 2002 159 132
- PATENT ABSTRACTS OF JAPAN vol. 2000, no. 24, 11 mai 2001 (2001-05-11) -& JP 2001 185787 A (SUMITOMO ELECTRIC IND LTD), 6 juillet 2001 (2001-07-06)
- CHIEN-JEN CHEN ET AL.: "Time-Domain Characterization of Transient Effects and Double Rayleigh Backscattering Noise in Raman Amplifiers" OPTICAL FIBER COMMUNICATIONS CONFERENCE PROCEEDINGS, vol. 1, 17 mars 2002 (2002-03-17), - 22 mars 2002 (2002-03-22) pages 634-636, XP002259430 Anaheim, CA, USA

## Description

La présente invention concerne un dispositif optique de traitement de signal, utilisé notamment pour la suppression du bruit dit de double rétro-diffusion Rayleigh. Elle concerne également une installation de transmission optique de signaux comportant un tel dispositif.

Plus précisément, l'invention concerne un dispositif optique destiné à être adapté sur des moyens de transmission optique d'au moins un signal porteur d'informations, et comportant des moyens de suppression de signaux rétro-diffusés dans les moyens de transmission optique.

On connaît de tels dispositifs optiques visant à supprimer tout bruit de rétro-diffusion dans une fibre optique de transmission. En général, ils comportent un isolateur disposé sur la fibre optique de transmission. Cet isolateur ne laisse passer les signaux optiques que dans un seul sens, c'est-à-dire dans le sens de transmission du signal porteur d'informations, mais bloque toute transmission de signaux dans l'autre sens, c'est-à-dire notamment les signaux rétro-diffusés dans la fibre optique.

Cependant, pour des applications de transmission optique à longue distance et à débit élevé, il est particulièrement intéressant d'amplifier régulièrement le signal le long de la fibre optique de transmission à l'aide d'un système d'amplification Raman distribuée. Ce système d'amplification comporte l'avantage d'être efficace sur une bande plus large tout en améliorant le rapport signal sur bruit, par rapport à un amplificateur optique classique localisé.

Ce système d'amplification Raman distribuée est mis en oeuvre par l'injection, dans la fibre optique de transmission, d'un signal lumineux laser rétro-propagé, dit signal de pompe. La longueur d'onde de ce signal de pompe est en général d'environ 100 nm en dessous de la longueur d'onde du signal porteur d'informations transmis, c'est-à-dire par exemple 1450 nm pour l'amplification d'un signal porteur d'informations dont la longueur d'onde porteuse est de 1550 nm.

Cependant, l'amplification Raman distribuée pose un nouveau problème : elle génère un bruit de double rétro-diffusion Rayleigh qui interfère avec le signal porteur d'informations et engendre un bruit de battement sur le récepteur en fin de transmission. Ce bruit nuit à la qualité de la propagation.

L'utilisation d'un isolateur dans ce cas n'est pas idéale. En effet, l'isolateur supprime en partie le bruit de double rétro-diffusion Rayleigh, mais supprime en même temps le signal de pompe rétro-propagé, ce qui nécessite l'installation d'un deuxième système d'amplification Raman distribuée sur la fibre optique de transmission, pour amplifier le signal situé en amont de l'isolateur. Cette solution est coûteuse et ne permet pas de discriminer le signal de rétro-diffusion Rayleigh du signal de pompe dans la fibre de transmission.

L'invention vise à remédier à cet inconvénient en fournissant un dispositif optique de traitement de signal capable de supprimer seulement une partie prédéterminée des signaux rétro-diffusés, notamment pour la suppression d'un bruit dit de rétro-diffusion Rayleigh rétro-propagé dans des moyens de transmission optique sur lesquels est installé un système d'amplification Raman distribuée.

WO 02/03579 décrit un dispositif optique comprenant des amplificateurs, par exemple des amplificateurs Raman disposés entre deux circulateurs de raccordement du dispositif à des moyens de transmission optique. Les amplificateurs sont disposés à proximité de filtres mais ces filtres n'ont pas pour fonction d'effectuer une discrimination entre un signal de pompe Raman et les bruits rétro-diffusés.

US 2002/159132 décrit un dispositif de traitement de signal comprenant un réflecteur raccordé à des moyens de transmission optique par un circulateur. Le réflecteur n'est pas raccordé en parallèle aux moyens de transmission optique.

US 2002/081069 décrit un dispositif optique de traitement de signal, destiné à être adapté sur des moyens de transmission optique d'au moins un signal porteur d'informations, comportant des moyens de suppression de signaux rétro-diffusés dans les moyens de transmission optique. Les moyens de transmission optique comprennent également des moyens de discrimination d'un seul signal porteur d'informations et d'un signal de bruit de rétro-diffusion de Rayleigh.

L'invention a donc pour objet un dispositif optique de traitement de signal, destiné à être adapté sur des moyens de transmission optique d'une pluralité de signaux porteurs d'informations, comme décrit dans la revendication 1.

En effet, alors qu'il est impossible de discriminer, par exemple par filtrage, le signal porteur d'informations dans les moyens de transmission optique, étant donné que la longueur d'onde du signal de rétro-diffusion Rayleigh est la même que celle du signal porteur d'informations, il est possible de réaliser cette discrimination, dès lors que les signaux rétro-diffusés et rétro-propagés sont dérivés vers un milieu de propagation optique spécifique auquel sont raccordés des moyens de discrimination. Ainsi, il est possible de supprimer un bruit de rétro-diffusion Rayleigh, tout en laissant passer d'autres signaux rétro-propagés, notamment un signal de pompe, lorsque ces signaux ont des longueurs d'ondes différentes.

Cette solution ne nécessite pas l'installation d'un deuxième dispositif d'amplification Raman distribuée en amont du dispositif optique de traitement de signal.

Un dispositif optique de traitement de signal selon l'invention peut en outre comporter l'une ou plusieurs des caractéristiques suivantes :
- les moyens de dérivation comportent deux circulateurs, disposés chacun à l'un des points de raccordement du milieu de propagation optique sur les moyens de transmission optique, de manière à provoquer la circulation du signal porteur d'informations dans les moyens de transmission optique et la circulation des signaux rétro-diffusés dans le milieu de propagation optique, entre les deux circulateurs ;
- il comporte en outre un module fonctionnel optique disposé sur les moyens de transmission optique entre les deux circulateurs ;
- le module fonctionnel optique comporte au moins l'un des éléments choisis dans l'ensemble constitué d'un multiplexeur optique d'insertion/extraction de longueurs d'ondes, d'un commutateur optique, d'un compensateur de dispersion modale de polarisation, et d'un régénérateur optique ;
- les moyens de discrimination de signaux comprennent une pluralité de réseaux de Bragg disposés en série, dont les longueurs d'ondes de réflexion correspondent respectivement aux longueurs d'ondes porteuses de signaux de rétro-diffusion issus de la pluralité des signaux porteurs d'informations ;
- les moyens de discrimination de signaux comprennent un démultiplexeur de signaux optiques associé à un multiplexeur de signaux optiques, le démultiplexeur étant conçu par construction pour ne transmettre que certains signaux de longueurs d'ondes prédéterminées ; et
- les moyens de transmission optique comportent une fibre optique de ligne, et le milieu de propagation optique comporte une portion de fibre optique.

L'invention a également pour objet un dispositif optique de suppression de bruit de rétro-diffusion Rayleigh comportant un dispositif optique de traitement de signal tel que décrit précédemment.

Enfin, l'invention a également pour objet une installation optique de transmission de signaux, comportant une fibre optique de transmission d'au moins un signal porteur d'informations et un système d'amplification Raman distribuée, comportant en outre un dispositif optique de traitement de signal tel que décrit précédemment.

L'invention a encore pour objet un procédé de traitement de signal optique, tel que décrit dans la revendication 9.

L'invention sera mieux comprise à l'aide de la description qui va suivre, donnée uniquement à titre d'exemple et faite en se référant aux dessins annexés dans lesquels :
- la figure 1 représente schématiquement l'évolution de la puissance d'un signal transmis dans une fibre optique munie d'un système d'amplification Raman distribuée ;
- la figure 2 représente schématiquement la structure d'un dispositif de traitement de signal installé sur la fibre optique de la figure 1 ;
- la figure 3 représente schématiquement la structure d'un dispositif de traitement de signal selon un mode de réalisation de l'invention ; et
- la figure 4 représente schématiquement la structure d'un dispositif de transmission de signal selon un autre mode de réalisation de l'invention.

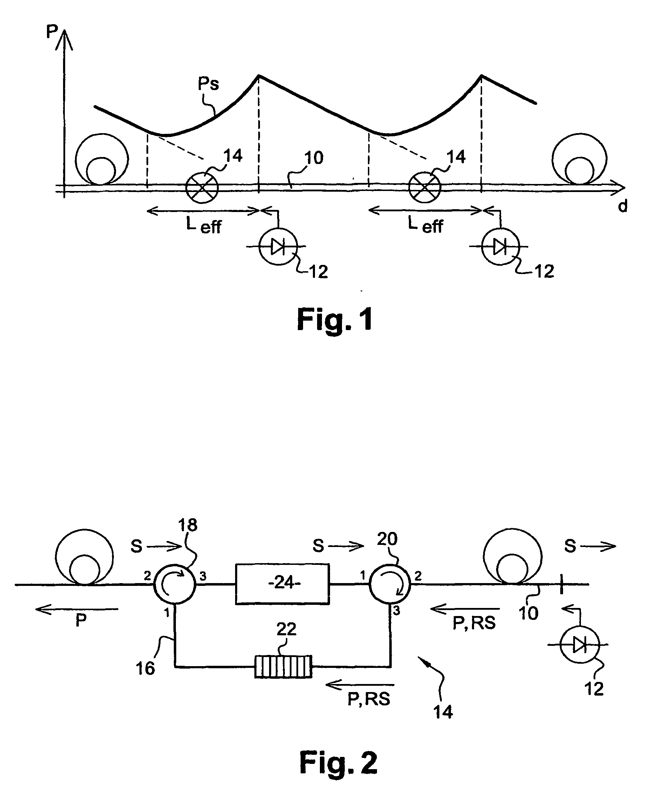

Sur la figure 1, on a représenté une fibre optique de transmission 10 formant l'axe horizontal d'un diagramme. Ce diagramme représente l'évolution de la puissance d'un signal S porteur d'informations le long de la fibre optique 10.

A certains endroits, en général réguliers, des générateurs 12 de signaux de pompe sont raccordés à la fibre optique de transmission 10 pour la rétro-propagation d'un signal de pompe P dans la fibre optique. Par exemple, ces générateurs 12 sont disposés tous les 100 km.

On entend par "rétro-propagation" d'un signal, la propagation de ce signal en sens inverse de la propagation du signal porteur d'informations transmis par la fibre optique 10.

Le signal de pompe rétro-propagé amplifie le signal S porteur d'informations sur une longueur efficace L_{eff} d'une vingtaine de kilomètres de la fibre optique de transmission 10.

Ainsi, le signai S porteur d'informations qui tend à s'atténuer le long de la fibre optique de transmission 10 est amplifié par le signal de pompe P introduit par l'un des générateurs 12 dans la portion optique de fibre optique de transmission 10 se trouvant à une distance inférieure à L_{eff} en amont de ce générateur 12.

Dans cette même portion de fibre optique de transmission 10, on insère un dispositif optique 14 de traitement de signal selon l'invention pour supprimer le bruit de rétro-diffusion Rayleigh engendré par la présence de ce générateur 12, tout en laissant passer le signal de pompe.

Comme cela est représenté sur la figure 2, le dispositif optique 14, non revendiqué, comporte une portion de fibre optique 16 raccordée en parallèle sur la fibre optique de transmission 10, au moyen de deux circulateurs 18 et 20 situés chacun à une extrémité de la portion de fibre optique 16. Chaque circulateur 18, 20 comporte trois bornes dont deux sont reliées à la fibre optique de transmission 10 par insertion des circulateurs dans celle-ci et dont l'une est reliée à l'une des extrémités de la portion de fibre optique 16.

Le premier 18 des deux circulateurs rencontré par le signal porteur d'informations S, est disposé sur la fibre optique de transmission 10 de telle sorte que :
- un signal provenant de la portion de fibre 16 est dirigé dans la fibre de transmission 10 dans le sens de rétro-propagation ;
- un signal provenant de la fibre de transmission 10 dans le sens de propagation du signal porteur d'informations S est dirigé vers la fibre de transmission 10, toujours dans le sens de propagation du signal porteur d'informations S ; et
- un signal provenant de la fibre de transmission 10 dans le sens de rétro-propagation est stoppé et supprimé.

Le second circulateur 20 est disposé sur la fibre de transmission 10 à l'autre extrémité de la portion de fibre 16 de telle sorte que :
- un signal provenant de la fibre optique de transmission 10 dans le sens de propagation du signal porteur d'informations S est dirigé vers la fibre de transmission 10, toujours dans le sens de propagation du signal porteur d'informations S ;
- un signal en provenance de la fibre de transmission 10 dans le sens de rétro-propagation est dirigé dans la portion de fibre optique 16 ; et
- un signal en provenance de la portion de fibre optique 16 est stoppé et supprimé.

Ainsi, le signal porteur d'informations S, se propageant dans la fibre de transmission 10 dans le sens de propagation, traverse tout d'abord le premier circulateur 18. En sortie de ce circulateur 18 il continue à se propager dans le sens de propagation dans la fibre de transmission 10 puis arrive en entrée du second circulateur 20. En sortie de celui-ci il continue à se propager dans la fibre de transmission 10 dans le sens de propagation.

Par contre, le signal de pompe P et le bruit de rétro-diffusion Rayleigh RS, induit par la présence du générateur 12 sur la fibre de transmission 10 se propagent dans le sens inverse du signal porteur d'informations S. Ces deux signaux rétro-diffusés arrivent tout d'abord en entrée du second circulateur 20 et sont dérivés par ce dernier dans la portion de fibre optique 16. Ils arrivent ensuite en entrée du premier circulateur 18 situé à l'autre extrémité de la portion de fibre optique 16 et sont de nouveau dirigés dans la fibre de transmission 10 dans le sens de rétro-propagation.

On constate donc que les deux circulateurs 18 et 20 permettant de raccorder la portion de fibre optique 16 à la fibre de transmission 10 forment des moyens de dérivation des signaux rétro-diffusés P et RS dans la fibre de transmission 10 vers cette portion de fibre optique 16.

Le dispositif de traitement de signal 14 comporte en outre des moyens de discrimination de signaux raccordés à la portion de fibre optique 16 dans laquelle se propagent le signal de pompe P et le bruit de rétro-diffusion Rayleigh RS.

Ces moyens de discrimination comprennent par exemple un filtre passe-bande, dont la fréquence centrale est centrée sur la longueur d'onde du signal de pompe P et excluant notamment les signaux de longueur d'onde égale à celle du bruit de rétro-diffusion Rayleigh RS, qui est d'environ 100 nm supérieure à celle du signal de pompe.

Ainsi, les signaux rétro-diffusés se propageant dans la portion de fibre optique 16 traversent le filtre passe-bande 22, de sorte qu'en sortie de ce filtre, seul le signal de pompe se propage. Ainsi, ce filtre 22 constitue des moyens de discrimination des signaux rétro-diffusés se propageant dans la portion 16 de fibre optique, permettant en outre de supprimer le signal de rétro-diffusion Rayleigh par filtrage pour ne laisser passer que le signal de pompe P.

Il est possible de remplacer le filtre passe-bande 22 par une fibre à réseau de Bragg 22, dont la longueur d'onde de réflexion correspond à la longueur d'onde du bruit de rétro-diffusion RS.

Cette fibre à réseau de Bragg 22 est connue et se comporte de la façon suivante :
- les signaux dont la longueur d'onde est proche de la longueur d'onde de réflexion du réseau de Bragg sont réfléchis par ce réseau de Bragg ; et
- les signaux dont la longueur d'onde est éloignée de la longueur d'onde de réflexion du réseau de Bragg, c'est-à-dire notamment le signal de pompe P, sont transmis par le réseau de Bragg ;

De la sorte, le signal de pompe P se propageant dans la portion de fibre optique 16 traverse le réseau de Bragg 22 et est dirigé par le circulateur 18 dans la fibre de transmission dans le sens de rétro-propagation.

Par contre, le signal de rétro-diffusion Rayleigh RS se propageant dans la même portion de fibre optique 16 est réfléchi par le réseau de Bragg 22 vers le second circulateur 20, puis est stoppé et supprimé par ce dernier qui fait alors office de filtre.

De façon optionnelle, le dispositif optique de traitement de signal 14 comporte, entre les deux circulateurs 18 et 20, sur la fibre de transmission 10, un module fonctionnel optique 24. Ce module fonctionnel optique 24 comporte par exemple un multiplexeur optique d'insertion/d'extraction de longueurs d'ondes, un commutateur optique, un compensateur de dispersion modale de polarisation, un générateur optique, ou une combinaison de plusieurs de ces éléments.

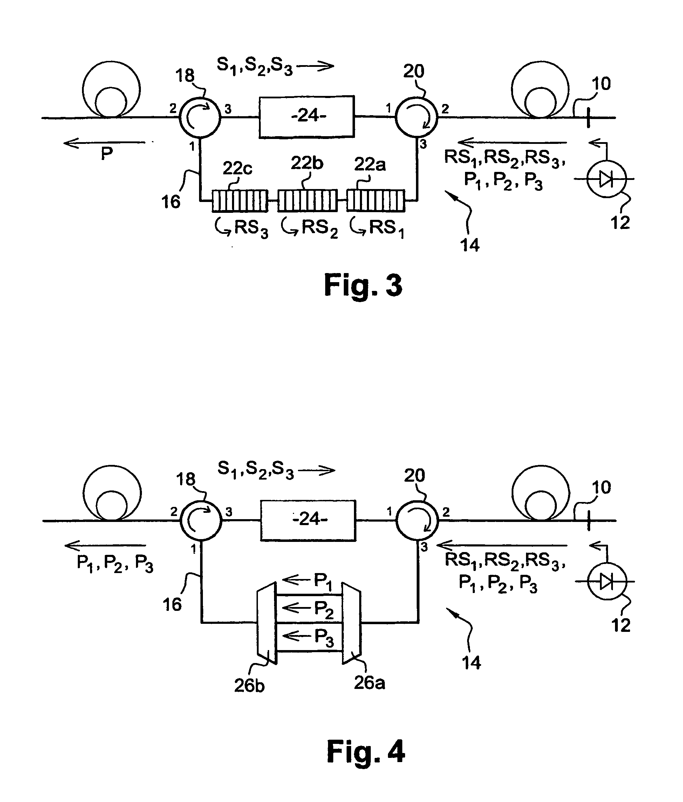

Un mode de réalisation est représenté sur la figure 3. Sur cette figure, on utilise la fibre optique de transmission 10 pour la transmission d'une pluralité de signaux porteurs d'informations. Par exemple, on transmet trois signaux S₁, S₂ et S₃ se propageant à des longueurs d'ondes différentes, λ₁, λ₂ et λ₃.

Le système d'amplification Raman distribuée matérialisé par le générateur 12 est alors adapté pour la génération de trois signaux de pompe Raman P₁, P₂ et P₃.

Cette propagation de trois signaux induit en outre la rétro-propagation de trois signaux de bruit de rétro-diffusion Rayleigh RS₁, RS₂ et RS₃, avec les signaux de pompe P₁, P₂ et P₃.

Dans ce cas, la portion de fibre optique 16 comporte trois fibres à réseau de Bragg 22a, 22b et 22c, chacune de ces fibres à réseau de Bragg étant centrée sur l'une des longueurs d'ondes des bruits de rétro-diffusion Rayleigh RS₁, RS₂ et RS₃.

Ces trois fibres à réseau de Bragg sont tout simplement montées en série et provoquent chacune la réflexion d'une partie du signal rétro-diffusé se propageant dans la portion de fibre optique 16, c'est-à-dire respectivement le bruit rétro-diffusé RS₁ induit par le signal S₁, le signal rétro-diffusé RS₂ induit par le signal S₂ et le signal rétro-diffusé RS₃ induit par le signal S₃.

Par contre, les trois signaux de pompe Raman P₁, P₂ et P₃ sont intégralement transmis à travers les fibres à réseau de Bragg 22a, 22b et 22c.

Un autre mode de réalisation est représenté sur la figure 4. Sur cette figure, on utilise également la fibre optique de transmission 10 pour la transmission d'une pluralité de signaux porteurs d'informations S₁, S₂ et S₃, comme dans le cas du précédent mode de réalisation.

Mais dans ce cas, en alternative, la portion de fibre optique 16 comporte un démultiplexeur 26a associé à un multiplexeur 26b. Le démultiplexeur 26a est conçu par construction pour ne laisser passer que les signaux de pompe Raman P₁, P₂ et P₃ sur trois portions de fibre optique branchées en parallèle entre le démultiplexeur 26a et le multiplexeur 26b.

Ainsi, les signaux rétro-propagés dans la portion de fibre optique 16 arrivent en entrée du démultiplexeur 26a. De l'ensemble de ces signaux, seuls les trois signaux de pompe P₁, P₂ et P₃ sont fournis en sortie du multiplexeur 26b pour être de nouveau injectés dans la fibre de ligne 10. Les signaux de bruit de rétro-diffusion Rayleigh RS₁, RS₂ et RS₃ sont filtrés par le démultiplexeur 26a.

Il apparaît clairement qu'un dispositif optique de traitement du signal selon l'invention permet la suppression de tout bruit de rétro-diffusion Rayleigh, tout en permettant la propagation du signal de pompe dans le sens de rétro-propagation en aval et en amont du dispositif optique de traitement de signal, dans la fibre de transmission 10.

Ce dispositif permet, à moindre frais, d'utiliser un système d'amplification Raman distribuée, dans un dispositif de transmission optique de signaux, en résolvant le problème de la présence de bruit de rétro-diffusion Rayleigh.

## Revendications

1. Dispositif (14) de traitement de signal optique, destiné à être adapté sur des moyens (10) de transmission optique d'une pluralité de signaux se propageant dans les moyens de transmission optique (10) à des longueurs d'onde différentes (S₁, S₂, S₃) porteurs d'informations, le dispositif comportant des moyens (20, 22) de suppression de signaux (RS ; RS₁, RS₂, RS₃) rétro-diffusés dans les moyens (10) de transmission optique, un milieu de propagation optique (16) et destinés à raccorder, en parallèle, en deux points de raccordement, le milieu de propagation optique (16) sur les moyens (10) de transmission optique et adaptés à dériver, des moyens (18, 20) de dérivation vers ce milieu de propagation optique (18), des signaux (P₁, P₂, P_{3;} RS₁, RS₂, RS₃) se propageant en sens contraire des signaux porteurs d'informations dans les moyens (10) de transmission optique, **caractérisé e**n ce que les moyens de suppression de signaux rétro-diffusés sont des moyens (22) de discrimination entre une pluralité de signaux de pompe (P1, P2, P3) destinés à être H rétro-propagés dans les moyens (10) de transmission optique et des signaux de rétro-diffusion Rayleigh (RS₁, RS₂, RS₃), ces moyens (22) de discrimination étant raccordés au milieu de propagation optique (16) de manière à supprimer les signaux de rétro-diffusion Rayleigh (RS₁, RS₂, RS₃) par filtrage pour ne laisser passer que la pluralité de signaux de pompe (P1, P2, P3).

2. Dispositif (14) selon la revendication 1, **caractérisé en ce que** les moyens de discrimination de signaux comprennent une pluralité de réseaux de Bragg (22a, 22b, 22c) disposés en série, dont les longueurs d'ondes de réflexion correspondent respectivement aux longueurs d'ondes porteuses de signaux de rétro-diffusion (RS₁, RS₂, RS₃) de la pluralité des signaux porteurs d'informations (S₁, S₂, S₃).

3. Dispositif (14) selon la revendication 1, **caractérisé en ce que** les moyens de discrimination de signaux comprennent un démultiplexeur de signaux optiques (26a), associé à un multiplexeur de signaux optiques (26b), le démultiplexeur étant conçu par construction pour ne transmettre que certains signaux de longueurs d'onde prédéterminées.

4. Dispositif (14) selon l'une quelconque des revendications 1 à 3, **caractérisé en ce que** les moyens de dérivation comportent deux circulateurs (18, 20), disposés chacun à l'un des points de raccordement du milieu de propagation optique (16) sur les moyens (10) de transmission optique, de manière à provoquer la circulation du signal porteur d'informations dans les moyens (10) de transmission optique et la circulation des signaux se propageant en sens contraire des signaux porteurs d'informations dans le milieu de propagation optique (16), entre les deux circulateurs.

5. Dispositif optique (14) selon la revendication 4, **caractérisé en ce qu'**il comporte en outre un module fonctionnel optique (24) destiné à être disposé sur les moyens (10) de transmission optique entre les deux circulateurs (18, 20).

6. Dispositif (14) selon la revendication 5, **caractérisé en ce que** le module fonctionnel optique (24) comporte au moins l'un des éléments choisis dans l'ensemble constitué d'un multiplexeur optique d'insertion/extraction de longueurs d'ondes, d'un commutateur optique, d'un compensateur de dispersion modale de polarisation, et d'un régénérateur optique.

7. Dispositif (14) selon l'une quelconque des revendications 1 à 6, **caractérisé en ce que** les moyens (10) de transmission optique comprennent une fibre optique de ligne, et **en ce que** le milieu de propagation optique (16) comporte une portion de fibre optique.

8. Installation optique de transmission de signaux, comportant un système d'amplification Raman distribuée, **caractérisée en ce qu'**elle comporte en outre un dispositif optique (14) de traitement de signal selon l'une quelconque des revendications 1 à 7.

9. Procédé de traitement de signal optique, comprenant les étapes suivantes:
- transmission d'une pluralité de signaux optiques porteurs d'informations (S1, S2, S3) dans des moyens (10) de transmission optique,
- propagation d'un second signal optique (P1, P2, P3) en sens inverse du sens de propagation de la pluralité de signaux porteurs d'informations (S1, S2, S3), dit sens de rétro-propagation,
- dérivation du second signal optique (P1, P2, P3) et de signaux de rétro-diffusion Rayleigh (RS1, RS2, RS3) vers un milieu (16) de propagation optique raccordé en parallèle, en deux points de raccordement, aux moyens de transmission optique (10),
**caractérisé en ce qu'**il comprend en plus les étapes suivantes :
- amplification de la pluralité de signaux porteurs d'informations (S1, S2, S3) à l'aide d'un système d'amplification Raman distribué utilisant comme pompe le second signal optique qui comprend une pluralité de signaux de pompe Raman (P1, P2, P3), le système d'amplification Raman induisant également les dits signaux de rétro-diffusion Rayleigh (RS1, RS2, RS3) se propageant dans le sens de rétro-propagation, et
- suppression des signaux de rétro-diffusion Rayleigh (RS1, RS2, RS3) par filtrage à l'aide de moyens de discrimination de signaux raccordés au milieu de propagation optique (16) pour ne laisser passer que la pluralité de signaux de pompe Raman (P1, P2, P3).

## Claims

1. Optical signal processing device (14), intended to be adapted to means (10) of optically transmitting a plurality of signals propagating in optical transmission means (10) at different wavelengths (S₁, S₂, S₃) bearing information, the device comprising means (20, 22) of suppressing signals (RS; RS₁, RS₂, RS₃) backscattered in the optical transmission means (10), an optical propagation medium (16) and branch connection means (18, 20) intended to connect, in parallel, at two connection points, the optical-propagation medium (16) to the optical transmission means (10), and suitable for branch-connecting, to this optical propagation medium (16), signals (P₁, P₂, P₃; RS₁, RS₂, RS₃) propagating in the opposite direction of the information-bearing signals in the optical transmission means (10), **characterized in that** the backscattered signal suppression means are means (22) of discriminating between a plurality of pump signals (P₁, P₂, P₃) intended to be backscattered in the optical transmission means (10) and Rayleigh backscatter signals (RS₁, RS₂, RS₃), these discriminating means (22) being connected to the optical propagation medium (16) so as to eliminate the Rayleigh backscatter signals (RS₁, RS₂, RS₃) by filtering, to allow only the plurality of pump signals (P₁, P₂, P₃) to pass.

2. Device (14) according to Claim 1, **characterized in that** the signal discrimination means comprise a plurality of Bragg arrays (22a, 22b, 22c) arranged in series, the reflection wavelengths of which respectively correspond to the backscatter-signal-bearing wavelengths (RS₁, RS₂, RS₃) of the plurality of information-bearing signals (S₁, S₂, S₃).

3. Device (14) according to Claim 1, **characterized in that** the signal discrimination means comprise an optical signal demultiplexer (26a), associated with an optical signal multiplexer (26b), the demultiplexer being designed by construction to transmit only certain signals of predetermined wavelengths.

4. Device (14) according to any one of Claims 1 to 3, **characterized in that** the branch-connecting means comprise two circulators (18, 20), each positioned at one of the points for connecting the optical propagation medium (16) to the optical transmission means (10), so as to provoke the circulation of the information-bearing signal in the optical transmission means (10) and the circulation of the signals propagating in the opposite direction of the information-bearing signals in the optical propagation medium (16), between the two circulators.

5. Optical device (14) according to Claim 4, **characterized in that** it also comprises a functional optical module (24), intended to be positioned on the optical transmission means (10) between the two circulators (18, 20).

6. Device (14) according to Claim 5, **characterized in that** the functional optical module (24) comprises at least one of the elements chosen from the set made up of an optical multiplexer for inserting/extracting wavelengths, an optical switch, a modal polarization dispersion compensator and an optical regenerator.

7. Device (14) according to any one of Claims 1 to 6, **characterized in that** the optical transmission means (10) comprise a line optical fibre, and **in that** the optical propagation medium (16) comprises a portion of optical fibre.

8. Optical signal transmission installation, comprising a distributed Raman amplification system, **characterized in that** it also comprises an optical device (14) for processing signals according to any one of Claims 1 to 7.

9. Method of processing optical signals, comprising the following steps:
- transmission of a plurality of information-bearing optical signals (S1, S2, S3) in the optical transmission means (10),
- propagation of a second optical signal (P1, P2, P3) in the reverse direction of the direction of propagation of the plurality of information-bearing signals (S1, S2, S3), called back-propagation direction,
- branch-connection of the second optical signal (P1, P2, P3) and of Rayleigh backscatter signals (RS1, RS2, RS3) to an optical propagation medium (16) connected in parallel, at two connection points, to the optical transmission means (10),
**characterized in that** it also comprises the following steps:
- amplification of the plurality of information-bearing signals (S1, S2, S3) using a distributed Raman amplification system that uses as its pump the second optical signal which comprises a plurality of Raman pump signals (P1, P2, P3), the Raman amplification system also inducing said Rayleigh backscatter signals (RS1, RS2, RS3) to propagate in the back-propagation direction, and
- elimination of the Rayleigh backscatter signals (RS1, RS2, RS3) by filtering using signal discrimination means connected to the optical propagation medium (16) to allow only the plurality of Raman pump signals (P1, P2, P3) to pass.

## Patentansprüche

1. Vorrichtung (14) zur optischen Signalverarbeitung, die dazu bestimmt ist, an Mittel (10) zur optischen Übertragung mehrerer informationstragender Signale (S₁, S₂, S₃) angepasst zu werden, die sich in den optischen Übertragungsmitteln (10) auf unterschiedlichen Wellenlängen ausbreiten, wobei die Vorrichtung Mittel (20, 22) zur Unterdrückung von Signalen (RS; RS₁, RS₂, RS₃), die in den optischen Übertragungsmitteln (10) rückgestreut werden, ein optisches Ausbreitungsmedium (16) und Abzweigmittel (18, 20) aufweist, die dazu bestimmt sind, parallel an zwei Anschlusspunkten das optische Ausbreitungsmedium (16) an die optischen Übertragungsmittel (10) anzuschließen und ausgelegt sind, um zu diesem optischen Ausbreitungsmedium (16) Signale (P₁, P₂, P₃, RS₁, RS₂, RS₃) abzuzweigen, die sich in Gegenrichtung zu den informationstragenden Signalen in den optischen Übertragungsmitteln ausbreiten, **dadurch gekennzeichnet, dass** die Mittel zur Unterdrückung rückgestreuter Signale Mittel (22) zur Unterscheidung zwischen mehreren Pumpsignalen (P₁, P₂, P₃), die dazu bestimmt sind, in die optischen Übertragungsmittel (10) rückausgebreitet zu werden, und Rayleigh-Rückstreuungssignalen (RS₁, RS₂, RS₃) sind, wobei diese Unterscheidungsmittel (22) an das optische Ausbreitungsmedium (16) angeschlossen sind, um die Rayleigh-Rückstreuungssignale (RS₁, RS₂, RS₃) durch Filterung zu unterdrücken, damit nur die mehreren Pumpsignale (P₁, P₂, P₃) durchgelassen werden.

2. Vorrichtung (14) nach Anspruch 1, **dadurch gekennzeichnet, dass** die Signalunterscheidungsmittel mehrere in Reihe angeordnete Bragg-Gitter (22a, 22b, 22c) aufweisen, deren Reflexionswellenlängen je den Trägerwellenlängen von Rückstreuungssignalen (RS₁, RS₂, RS₃) der mehreren informationstragenden Signale (S₁, S₂, S₃) entsprechen.

3. Vorrichtung (14) nach Anspruch 1, **dadurch gekennzeichnet, dass** die Signalunterscheidungsmittel einen optischen Signaldemultiplexer (26a) aufweisen, der einem optischen Signalmultiplexer (26b) zugeordnet ist, wobei der Demultiplexer bauartbedingt so konzipiert ist, dass er nur bestimmte Signale mit vorbestimmten Wellenlängen überträgt.

4. Vorrichtung (14) nach einem der Ansprüche 1 bis 3, **dadurch gekennzeichnet, dass** die Abzweigmittel zwei zirkulatoren (18, 20) aufweisen, die je an einem der Anschlusspunkte des optischen Ausbreitungsmediums (16) an die optischen Übertragungsmittel (10) angeordnet sind, um die zirkulation des informationstragenden Signals in den optischen Übertragungsmitteln (10) und die Zirkulation der Signale, die sich in Gegenrichtung zu den informationstragenden Signalen im optischen Ausbreitungsmedium (16) ausbreiten, zwischen den zwei Zirkulatoren zu bewirken.

5. Optische Vorrichtung (14) nach Anspruch 4, **dadurch gekennzeichnet, dass** sie außerdem ein optisches Funktionsmodul (24) aufweist, das dazu bestimmt ist, auf den optischen Übertragungsmitteln (10) zwischen den zwei zirkulatoren (18, 20) angeordnet zu werden.

6. Vorrichtung (14) nach Anspruch 5, **dadurch gekennzeichnet, dass** das optische Funktionsmodul (24) mindestens eines der Elemente aufweist, die aus der Gruppe ausgewählt werden, die aus einem optischen Wellenlängen-Add/Drop-Multiplexer, einem optischen Schalter, einem Kompensator der modalen Polarisationsdispersion und einem optischen Regenerator besteht.

7. Vorrichtung (14) nach einem der Ansprüche 1 bis 6, **dadurch gekennzeichnet, dass** die optischen Übertragungsmittel (10) eine Leitungs-Lichtleitfaser aufweisen und dass das optische Ausbreitungsmedium (16) einen Lichtleitfaserabschnitt aufweist.

8. Optische Signalübertragungseinrichtung, die ein System der verteilten Raman-Verstärkung aufweist, **dadurch gekennzeichnet, dass** sie außerdem eine optische Signalverarbeitungsvorrichtung (14) nach einem der Ansprüche 1 bis 7 aufweist.

9. Verfahren zur optischen Signalverarbeitung, das die folgenden Schritte aufweist:
- Übertragung mehrerer informationstragender optischer Signale (S₁, S₂, S₃) in optische Übertragungsmittel (10),
- Ausbreitung eines zweiten optischen Signals (P₁, P₂, P₃) in Gegenrichtung zur Ausbreitungsrichtung der mehreren informationstragenden Signale (S₁, S₂, S₃), Rückausbreitungsrichtung genannt,
- Abzweigung des zweiten optischen Signals (P₁, P₂, P₃) und von Rayleigh-Rückstreuungssignalen (RS₁, RS₂, RS₃) zu einem optischen Ausbreitungsmedium (16), das an zwei Anschlusspunkten parallel an die optischen Übertragungsmittel (10) angeschlossen ist,
**dadurch gekennzeichnet, dass** es außerdem die folgenden Schritte aufweist:
- Verstärkung der mehreren informationstragenden Signale (S₁, S₂, S₃) mit Hilfe eines verteilten Raman-Verstärkungs-Systems, das als Pumpe das zweite optische Signal verwendet, das mehrere Raman-Pumpsignale (P₁, P₂, P₃) aufweist, wobei das Raman-Verstärkungs-System ebenfalls die Rayleigh-Rückstreuungssignale (RS₁, RS₂, RS₃) induziert, die sich in der Rückausbreitungsrichtung ausbreiten, und
- Unterdrückung der Rayleigh-Rückstreuungssignale (RS₁, RS₂, RS₃) durch Filterung mit Hilfe von Signalunterscheidungsmitteln, die an das optische Ausbreitungsmedium (16) angeschlossen sind, um nur die mehreren Raman-Pumpsigale (P₁, P₂, P₃) durchzulassen.
